# FASCICULE DE BREVET EUROPEEN

(11) **EP 2 033 510 B1**
(45) Date de publication et mention de la délivrance du brevet: **17.10.2012**
(21) Numéro de dépôt: 08163742.3
(22) Date de dépôt: 05.09.2008
(51) Int. Cl.: A01G 5/02

(54) **Machine portative pour la fabrication de bouquets de fleurs**
Tragbare Maschine für die Herstellung von Blumensträußen
Portable machine for forming bouquets of flowers.

(30) Priorité: 06.09.2007 FR 0757391
(43) Date de publication de la demande: 11.03.2009
(73) Titulaire: SARL Cys Fleurs, 59380 Coudekerque Village (FR)
(72) Inventeur: Cys, Pascal, 59380 Coudekerque Village (FR)
(74) Mandataire: Balesta, Pierre

(56) Documents cités:
- WO-A-03/039241
- WO-A-2004/040961
- FR-A- 2 852 578
- FR-A- 2 884 684

## Description

La présente invention est relative à une machine portative pour la préparation de bouquets de fleurs, couramment appelés dans la profession de fleuriste, « bouquets bulle ». Cette préparation est réalisée au moyen d'une feuille d'emballage souple, généralement en plastique transparent ou munie de motifs, voire étanche. Dans la suite de la description, le terme bouquet bulle sera éventuellement utilisé pour définir le bouquet de fleurs.

Le bouquet de fleurs ou bouquet bulle peut être préparé au moyen d'une feuille souple seule, mise en forme pour constituer une poche, à l'intérieur de laquelle sont positionnées les tiges de fleurs formant le bouquet. La poche est serrée à son extrémité supérieure sur les tiges de fleurs, puis fixée par exemple au moyen d'un ruban pour être maintenue en position. Par ailleurs, cette poche permet le maintien et la stabilisation des fleurs composant le bouquet. Cette poche est également susceptible de recevoir de l'eau, notamment lorsque la feuille d'emballage est étanche, pour préserver les fleurs et éviter qu'elles ne se dessèchent. On pourrait toutefois concevoir l'utilisation de la machine selon l'invention pour la préparation d'un emballage de tout autre type de produit longiforme disposé verticalement tel que, par exemple, une bouteille que l'on souhaite offrir.

En outre, le bouquet bulle peut également prévoir l'utilisation d'un socle ou support, notamment en matériau plastique, ledit socle ou support étant disposé dans la poche afin de rigidifier celle-ci et de renforcer la stabilité des fleurs composant le bouquet.

L'invention sera notamment mise en oeuvre par les fabricants de machines ou de systèmes mécaniques, en particulier les fabricants de machines pour la fabrication de bouquets bulle. En outre, elle trouvera son application chez les fleuristes, et notamment chez les artisans fleuristes, soit directement dans leur boutique, soit sur des lieux publics de vente couverts ou en plein air, plus couramment appelés marchés ou elle permettra avantageusement la préparation rapide et de qualité de bouquets bulle à la demande des clients, en fonction des besoins et du type de fleurs que celui-ci souhaite lors de la composition de son bouquet.

Les machines connues actuellement se composent d'un plateau disposé notamment en partie supérieure de la machine, ledit plateau étant muni d'un orifice qui communique sur une enceinte. Le plateau permet le support de la feuille d'emballage souple. La feuille souple positionnée sur le plateau au dessus de l'orifice est alors introduite partiellement au travers de celui-ci, de sorte à être disposée à l'intérieur de l'enceinte, afin de former la poche de réception des tiges de fleurs. L'introduction de la partie de feuille au travers de l'orifice est réalisée soit manuellement, soit par des moyens mécaniques ou pneumatiques. Simultanément à l'introduction de cette partie de feuille, il est possible d'introduire un socle ou support permettant de rigidifier la poche et de maintenir convenablement les tiges de fleurs composant le bouquet. En outre, ce socle ou support permet de donner des formes particulières à la poche dépendant notamment de la forme dudit socle, et également de stabiliser les fleurs composant le bouquet.

En outre, ces machines comprennent des moyens de serrage de la poche sur les tiges de fleurs positionnées à l'intérieur de celle-ci. Ces moyens de serrage permettent le serrage de la poche, au niveau de son extrémité supérieure, ce qui permet ensuite, voire simultanément, la mise en place d'un lien pour maintenir serrée ladite poche fermée.

De telles machines sont par exemple décrites dans les documents FR 2.852.578 et FR 2.843.365. Ces machines sont automatisées et présentent un volume important. Elles nécessitent de plus l'utilisation d'énergie notamment électrique et/ou pneumatique pour actionner les différents mécanismes dont elles disposent, notamment pour le positionnement de la feuille d'emballage et la formation de la poche, et pour la réalisation du serrage de la poche avec les moyens de serrage.

Ce type de machine prévoit de plus, généralement, une alimentation en eau pour le remplissage de la poche avant son serrage et la mise en place d'un lien de maintien de la poche serrée.

De telles conceptions de machines présentent pour inconvénient de nécessiter une immobilisation totale de la machine pour leur alimentation. En outre, ces machines sont notamment prévues pour les grossistes qui préparent les bouquets de fleurs en grande série, pour les distribuer ensuite chez les artisans fleuristes. En effet, leur coût de fabrication nécessite une vente importante de bouquets pour amortir et rentabiliser un tel achat de machine, ne permettant par conséquent pas aux artisans fleuristes d'investir dans ce type de machine. Par ailleurs, leur encombrement présente un inconvénient pour les artisans fleuristes qui disposent généralement de locaux commerciaux de petite surface ne permettant pas la réception de telles machines.

Pour cela, les artisans fleuristes disposent généralement dans leur boutique d'un nombre limité de bouquets bulle préparés à l'avance par les grossistes. Lorsque le stock de bouquets est écoulé ou que le client souhaite une composition de fleurs personnalisée, le fleuriste doit alors préparer le bouquet bulle manuellement. Une telle préparation est souvent longue car elle nécessite de manipuler correctement les fleurs pour former le bouquet, lesdites fleurs devant être ensuite maintenues durant la manipulation de la feuille d'emballage pour la formation de la poche, qui doit être généralement remplie en eau puis maintenue au moyen d'un lien de serrage.

Par ailleurs, le temps de préparation peut avoir pour conséquence une perte de vente de fleurs ou de plantes, notamment lorsque plusieurs clients patientent dans la boutique, ceux-ci pouvant quitter le magasin pour aller effectuer leurs achats dans un autre magasin à proximité où ils seront éventuellement servis plus rapidement.

On connaît également d'autres machines telle que celle décrite dans le document WO 2004/040961. Ce document décrit une machine pour la préparation de bouquets de fleurs, fonctionnant manuellement, c'est-à-dire sans apport d'énergie électrique et/ou pneumatique. Cette machine prévoit des moyens mécaniques combinés pour la formation simultanée de la poche et le serrage de celle-ci en lui donnant une forme conique ou pyramidale. Ces moyens se composent d'une semelle d'appui disposée sous un orifice agencé sur un plateau support pour le positionnement de la feuille d'emballage, ladite semelle étant agencée pour translater verticalement d'une position haute, à proximité du plateau support, à une position basse pour la formation de la poche. En outre, les moyens mécaniques comprennent des doigts mécaniques articulés permettant le serrage d'un câble. Ce câble et les doigts mécaniques se resserrent sur la poche au fur et à mesure de sa formation lors de l'introduction de la feuille descendant avec la semelle. Le câble est monté coulissant à l'extrémité des doigts, le pivotement des doigts permettant le serrage de la feuille pour former la poche ; ces doigts laissent simultanément glisser le câble au niveau de leur extrémité pour resserrer celui-ci et assurer un serrage uniforme de la feuille.

Ces moyens mécaniques sont actionnés manuellement au moyen d'un levier de commande. Le levier de commande est manipulé selon deux positions binaires à savoir une première position où la semelle est remontée sous le plateau, les doigts étant écartés et le câble détendu, et une seconde position où la semelle est translatée vers le bas et les doigts sont resserrés avec le câble qui serre la poche formée lors de la descente de la semelle et de la feuille enfermant les tiges du bouquet. Ces fleurs sont notamment disposées dans un socle ou support formant un élément de base pour le maintien des tiges du bouquet.

Une telle conception de machine a pour inconvénient de ne pas pouvoir ajuster le serrage de la poche en fonction du bouquet de fleurs à composer, et notamment du diamètre formé par les tiges de fleurs, au niveau de la position de serrage de la poche. En outre, la machine décrite dans ce document WO 2004/040961 dispose d'un encombrement relativement important du fait de la conception du mécanisme prévoyant un système de translation verticale pour la commande de la semelle et des moyens de serrage de la poche. Une telle machine est conçue pour être immobilisée et utilisée en lieu fixe.

La présente invention a pour objectif de pallier les inconvénients des machines existant actuellement, telle que celles décrites dans les documents FR 2.852.578, FR 2.843.365 et WO 2004/040961. A ce sujet, l'invention concerne une machine pour la préparation de bouquets de fleurs, notamment appelés bouquets bulle, la préparation du bouquet de fleurs se faisant au moyen d'une feuille d'emballage apte à former une poche de réception pour les tiges de fleurs composant ledit bouquet. La machine comprend une enceinte et un plateau supérieur muni d'un orifice, cet orifice communiquant avec l'enceinte. Le plateau permet le positionnement de la feuille d'emballage, notamment en matériau souple, puis l'introduction d'une partie de celle-ci au travers de l'orifice afin de la disposer dans l'enceinte et de former ladite poche.

En outre, la machine comprend des moyens de serrage de la poche sur les tiges de fleurs qui sont positionnées à l'intérieur de ladite poche.

Selon l'invention, les moyens de serrage comprennent au moins un levier de commande manuel. Ce levier est apte à être actionné progressivement jusqu'à atteindre une position variable où l'extrémité supérieure de la poche est serrée sur les tiges de fleurs, cette position variable dépendant notamment du type de bouquets de fleurs à réaliser. Ce levier de commande est assujetti à un dispositif mécanique agencé dans l'enceinte. En outre, un collier de serrage est également agencé dans l'enceinte, sous le plateau, au niveau de l'orifice ; le collier est de préférence disposé parallèlement au plateau. Le collier est constitué d'au moins une partie flexible munie de deux extrémités assujetties au dispositif mécanique et il est disposé circulairement pour former un cercle présentant un diamètre initial, c'est à dire avant l'introduction de la feuille souple dans l'orifice pour constituer la poche, supérieur ou égal à la dimension de l'orifice. Il convient de remarquer que cette flexibilité permet de conférer la forme circulaire au collier une fois assujetti au dispositif mécanique. Par ailleurs, le dispositif mécanique est de préférence agencé pour se déplacer dans un plan parallèle au plateau supérieur, sous celui-ci, et pour déplacer simultanément les extrémités de la ou des parties flexibles en serrant progressivement et concentriquement ledit collier, proportionnellement à la position dudit levier de commande dont la position d'arrêt varie en fonction du diamètre formé par les tiges du bouquet de fleurs, ledit bouquet étant personnalisé selon le souhait des clients. De même, le desserrage du collier est réalisé progressivement et concentriquement sous l'action du levier, ce qui présente pour avantage de pouvoir affiner le positionnement des fleurs et le serrage lors de la formation du bouquet.

Selon un mode préférentiel de conception, le collier est constitué de deux parties flexibles, notamment deux lamelles flexibles ou deux câbles ou tiges flexibles, disposées en vis-à-vis et circulairement pour former un cercle. En outre le dispositif mécanique est agencé pour agir simultanément sur les extrémités des deux parties flexibles en serrant progressivement et concentriquement le collier.

Pour cela le dispositif mécanique est de préférence constitué de deux systèmes de transmission à came disposés en vis-à-vis et inversés. Des moyens de transmission permettant d'actionner simultanément lesdits systèmes de transmission au moyen du levier de commande. En outre, les systèmes de transmission reçoivent chacun l'une des extrémités des deux parties flexibles, les systèmes de transmission étant agencés pour agir, de préférence simultanément, sur les deux parties flexibles en serrant progressivement et concentriquement le collier.

Selon ce mode de réalisation le premier système de transmission est agencé pour, d'une part, maintenir la première extrémité de la première partie flexible, notamment une lamelle ou un câble, en la translatant radialement par rapport au cercle qui est formé et, d'autre part, faire coulisser quasi tangentiellement la seconde portion de la seconde partie flexible par rapport à ladite première extrémité de la première partie flexible. En outre, la vitesse de coulissement de la seconde portion de la seconde partie flexible est proportionnelle à la vitesse de translation de la première extrémité de la première partie flexible. Inversement, le deuxième système de transmission est agencé pour, d'une part, maintenir la première extrémité de la seconde partie flexible en la translatant radialement à vitesse égale et opposée à la première extrémité de la première partie flexible et, d'autre part, coulisser quasiment tangentiellement la seconde portion de la première partie flexible par rapport à ladite première extrémité de la seconde partie flexible. De même, la vitesse de coulissement de la seconde portion de la première partie flexible est égale et opposée à la vitesse de coulissement de la seconde portion de la seconde partie flexible.

Selon ce mode de conception, chaque système de translation est constitué d'une barre longitudinale à glissière, d'une came montée en glissière sur la barre longitudinale, d'une barre transversale à glissière montée perpendiculairement par rapport à la barre longitudinale, et d'un coulisseau monté simultanément en glissière sur la barre transversale et coulissant par rapport à la came. La liaison entre la came et le coulisseau est agencée pour que la translation de la came sur la barre longitudinale entraîne la translation à vitesse proportionnelle du coulisseau sur la barre transversale. En outre le coulisseau est agencé pour maintenir fixe la première extrémité de l'une des parties flexibles et pour recevoir de manière coulissant, à proximité de ladite première extrémité, la seconde portion de l'autre des parties flexibles, l'extrémité de ladite seconde portion étant solidaire de la came et apte à se déplacer avec celle-ci pour permettre le coulissement de ladite seconde portion à l'intérieur du coulisseau.

Selon un premier mode de réalisation, la came comprend une pièce, notamment de la forme d'un triangle rectangle disposé dans un plan parallèle au plateau supérieur, sur laquelle est montée coulissant le coulisseau suivant le côté hypoténuse du triangle. Cette pièce est montée en glissière sur la barre longitudinale suivant le côté adjacent. Par ailleurs, l'extrémité de la seconde portion de la partie flexible est maintenue fixe vis-à-vis de l'extrémité angulaire formée entre le côté adjacent et le côté hypoténuse. De manière préférentielle, l'angle formé entre le côté adjacent et le côté hypoténuse est de l'ordre de 72 degrés, permettant de synchroniser les vitesses de déplacement de la came et du coulisseau pour obtenir la concentricité du cercle lors du serrage ou desserrage du collier.

Selon un second mode de réalisation, la came comprend une plaque, de préférence de fine épaisseur, montée en glissière sur la barre longitudinale et munie d'une lumière longitudinale inclinée. Cette lumière reçoit une tête de guidage, par exemple un galet, agencée sur le coulisseau. L'extrémité de la seconde portion de la partie flexible est maintenue fixe vis-à-vis de cette plaque. De manière préférentielle, la lumière est inclinée d'un angle de l'ordre de 72 degrés par rapport au côté arrière de la plaque, c'est-à-dire le côté situé dans le sens de la barre longitudinale selon laquelle la plaque coulisse. Ce choix permet de synchroniser les vitesses de déplacement de la came et du coulisseau pour obtenir la concentricité du cercle lors du serrage ou desserrage du collier.

De manière préférentielle et non limitative, la machine consiste en un caisson portatif, notamment de la forme d'une valise, constituant ladite enceinte, la face supérieure du caisson constituant le plateau et présentant l'orifice pour le passage de la feuille d'emballage servant à la formation de la poche. Ainsi, la machine selon la présente invention présente pour avantage d'être portative et de ne nécessiter aucun apport d'énergie autre que la force humaine, le mécanisme de la machine étant manipulé très aisément par la seule action sur le levier de commande.

Par ailleurs, cette machine, de préférence sous la forme d'un caisson portatif, permet de composer des bouquets de fleurs diversifiés et répondant au souhait du client, ladite machine prévoyant un serrage de la poche adapté en fonction du type de bouquet à composer, et notamment de la quantité de tiges de fleurs le composant et du diamètre formé par les tiges insérées à l'intérieur de la poche formée par la feuille d'emballage.

En outre, la machine présente pour avantage de réaliser un serrage progressif de la poche, et réversible, ce qui permet éventuellement d'affiner le positionnement des fleurs avant le serrage complet du bouquet et la mise en place du lien. Le fleuriste conserve donc une grande liberté de manipulation durant la préparation du bouquet de fleurs, ce qui garantit une préparation de qualité en un temps réduit, et évite donc de laisser patienter trop longtemps la clientèle dans la boutique, notamment durant les heures d'affluence.

En outre, les moyens de serrage mis en oeuvre selon l'invention ont pour avantage d'être agencés et actionnés dans un plan parallèle à celui du plateau, et disposé sous celui-ci, ce qui permet de concevoir ladite machine sous la forme d'un caisson compacte et facilement transportable, rendant son utilisation possible tant dans la boutique de l'artisan que sur les lieux publics de vente tels que les marchés. Cette compacité de la machine évitant de plus l'encombrement dans la boutique de l'artisan fleuriste, et son rangement très aisé.

Un autre avantage de la présente invention est de concevoir une machine silencieuse actionnée manuellement, évitant ainsi toute nuisance sonore pouvant altérer les conditions de travail du fleuriste et éventuellement occasionner une gêne vis-à-vis de la clientèle présente dans le magasin.

D'autres avantages et caractéristiques de la présente invention apparaîtront à la lecture de la description qui va suivre et qui s'appuie sur un mode de réalisation préférentiel de la machine. Cette description du mode préférentiel de la machine s'appuie sur les figures suivantes :
- la figure 1 représente en perspective, un mode de conception la machine selon l'invention sous la forme d'une valise portative ;
- la figure 2 représente en plan, suivant une vue arrière, les éléments constituant la machine sous la forme d'une valise telle que présentée en figure 1, et notamment de la came et des moyens de transmission entre les deux systèmes de transmission ;
- la figure 3 représente une variante de conception des éléments constitutifs de la machine selon l'invention.

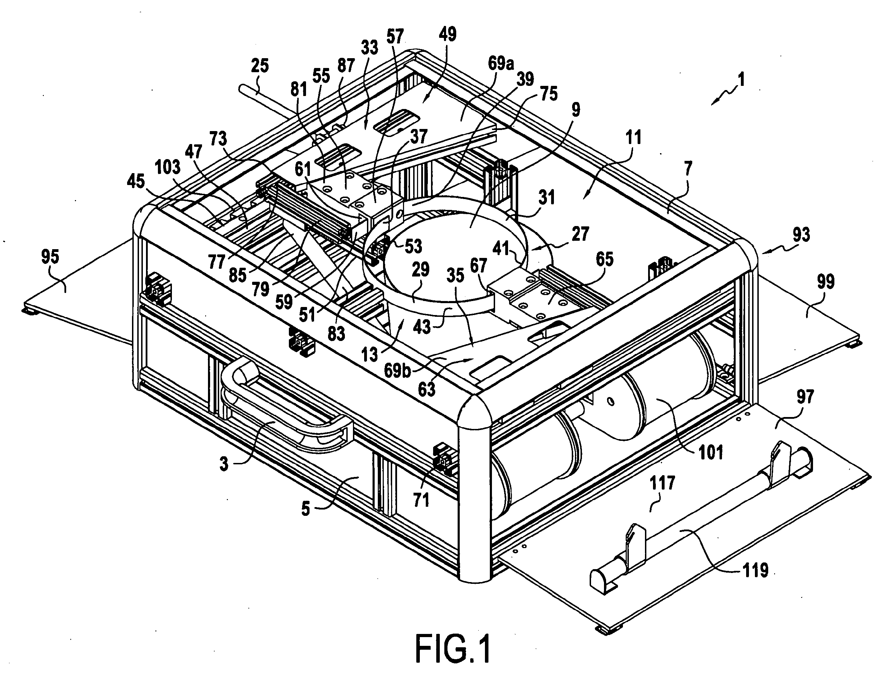

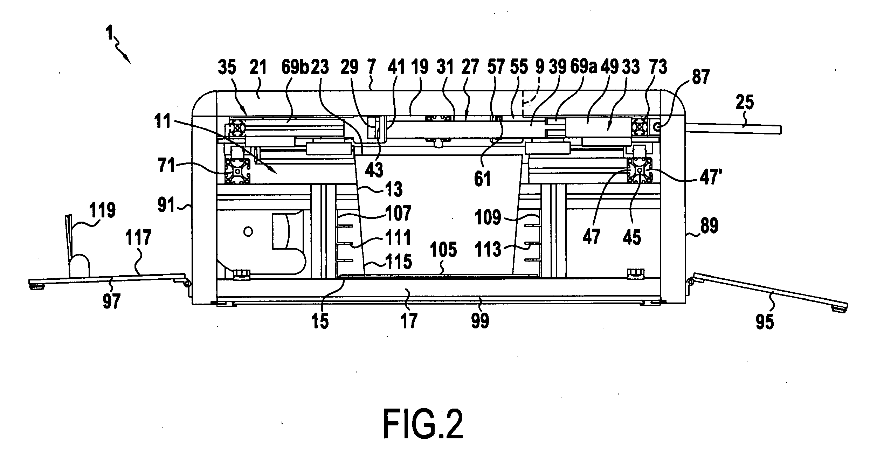

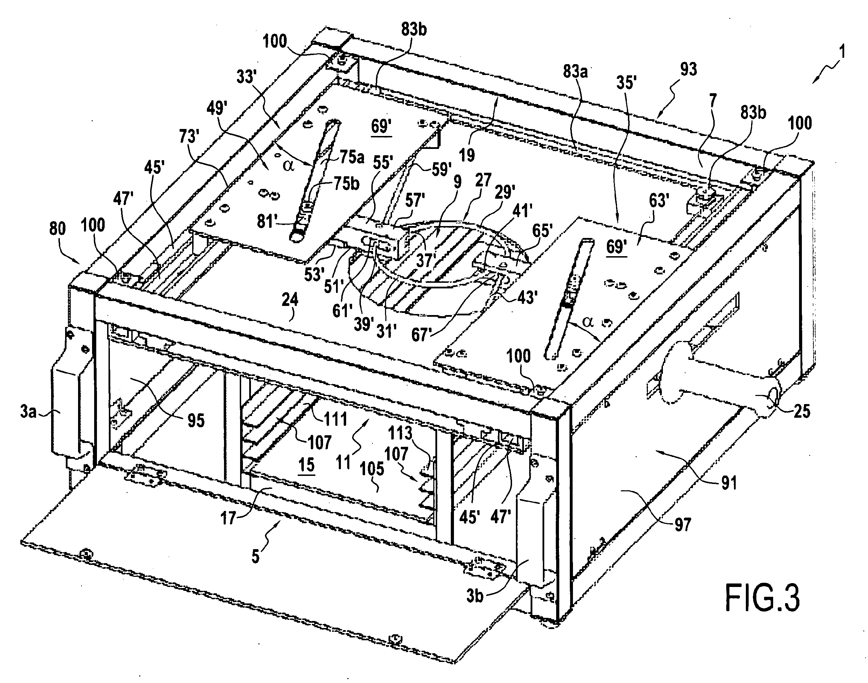

La machine 1 selon l'invention est agencée pour préparer des bouquets de fleurs, plus couramment appelés bouquets bulle. Le bouquet est préparé au moyen d'une feuille d'emballage en matériau souple, notamment étanche. La machine 1, illustrée aux figures 1 à 3, est constituée d'un caisson portatif, se présentant notamment et de préférence sous la forme d'une valise ou mallette portative 1 munie d'une poignée 3 sur sa face avant 5, tel qu'illustré en figures 1 et 2. on peut toutefois prévoir deux poignées 3a, 3b agencées sur les côtés latéraux de la face avant, tel qu'illustré en figure 3.

Cette valise 1 comprend un plateau supérieur 7 constitué par la face supérieure. En outre, le plateau supérieur 7 est muni d'un orifice 9 illustré en figure 1, cet orifice 9 étant de préférence de forme circulaire et disposé en partie centrale sur le plateau supérieur 7. Ce plateau supérieur 7 de la valise 1 est agencé pour recevoir la feuille d'emballage souple, ladite feuille étant apte à être déformée et introduite manuellement à travers l'orifice 9 afin d'être disposée à l'intérieur de l'enceinte 11 du caisson ou de la valise 1. L'introduction de la feuille au travers de l'orifice 9 permet de former une poche à l'intérieur de laquelle sont introduites les tiges de fleurs pour la composition du bouquet.

De manière préférentielle et non limitative, la valise 1 comprend un tube 13, notamment de forme cylindrique ou conique, qui est disposé à l'intérieur de l'enceinte 11. Le tube 13 est agencé pour permettre la formation de la poche de réception des tiges de fleurs, et le maintien et le positionnement desdites fleurs durant la constitution du bouquet. Le fleuriste dispose ainsi d'une grande liberté pour manipuler la feuille d'emballage et les fleurs. Ce tube 13, illustré en figure 2, repose sur un fond 15 agencé dans l'enceinte 11 et par exemple constitué par la face inférieure 17 de la valise 1, ledit tube 13 s'étendant verticalement jusque une position distante du plafond 19 de l'enceinte 11 constitué par la face supérieure 21 de la valise 1 afin de laisser un intervalle entre l'extrémité supérieure 23 du tube 13 et la face supérieure 19 de l'enceinte 11. Cet intervalle est notamment destiné à permettre le passage des moyens de serrage de la poche, tel que cela sera décrit ci-après. En outre, le tube 13 cylindrique ou conique disposé en dessous de l'orifice 9 est coaxial à celui-ci. Bien entendu ce tube 13 peut être envisagé sur la machine illustré en figure 3.

On peut, en outre, prévoir une plaque intermédiaire 24 telle qu'illustrée en figure 3, afin de constituer une séparation physique entre la zone de l'enceinte 11 dans laquelle est formée la poche et disposé le tube 13, et la zone dans laquelle sont disposés les moyens de serrage de la poche.

De manière préférentielle, le fond 15 agencé dans l'enceinte 11 est mobil, de manière à modifier la position du tube 13 et ainsi la profondeur de la poche en fonction de la longueur des tiges de fleurs constituant le bouquet, les extrémités des tiges de fleurs reposant sur ledit fond 15. Cette conception permet de définir convenablement la position de serrage sur les tiges de fleurs en fonction des différentes longueurs de tiges possibles, tout en permettant auxdites tiges de reposer sur le fond pour permettre au fleuriste de lâcher les fleurs sans que celles-ci ne tombent dans l'enceinte 11, et par conséquent de disposer de ses mains pour manipuler lesdites fleurs afin de former convenablement le bouquet. Ce fond 15 mobile sera décrit plus en détail ci-après.

Telle qu'illustrée sur les figures 1 à 3, la machine 1 comprend des moyens de serrage de la poche, ce serrage étant réalisé une fois les tiges de fleurs disposées à l'intérieur de ladite poche et que le bouquet est formé. Ces moyens de serrage comprennent notamment au moins un levier de commande 25, un collier de serrage 27 et un dispositif mécanique. Le levier de commande 25 est manuel et agencé pour être positionné à l'extérieur du caisson notamment durant son utilisation.

La position du levier de commande 25 tient compte notamment des utilisateurs potentiels, selon que ceux-ci soient gauchers ou droitiers. Par exemple, le levier de commande illustré sur les figures 1 à 3 est agencé, en particulier, pour un utilisateur droitier. Selon les figures 1 et 2, en mode d'utilisation normal, la face avant 5 de la valise 1, sur laquelle est agencée la poignée 3, est positionnée à l'arrière, c'est-à-dire sur le coté opposé à l'utilisateur, le plus éloigné par rapport à celui-ci. La valise 1 placée face à l'utilisateur se présente alors telle qu'illustrée sur la figure 2, l'utilisateur pouvant ainsi manipuler le levier de la main droite et accéder facilement à la face arrière de la valise, tel que cela sera décrit ci-après. Au contraire, selon la figure 3, en mode d'utilisation normal, la face avant 5 sur laquelle sont disposées les poignées 3a et 3b est positionné face à l'utilisateur. Dans ce cas, l'accès à la valise se fera directement par cette face avant 5 et non par la face arrière ; on peut toutefois prévoir également une accessibilité par la face arrière, tout comme il est possible de modifier la position des poignées.

Le levier de commande 25, illustré sur les figures 1 à 3, est apte à être actionné progressivement par un mouvement de translation depuis sa position initiale où le collier 27 est complètement desserré pour permettre l'introduction de la feuille à l'intérieur de l'enceinte 11 et la formation de la poche, jusqu'à une position où le collier 27 est serré sur les tiges de fleurs, au niveau de l'extrémité supérieure de ladite poche. Cette position de serrage est variable en fonction de la quantité de fleurs composant le bouquet, cette quantité de fleurs variable conditionnant le diamètre de serrage qui correspond au diamètre formé par les tiges du bouquet de fleurs au niveau de l'extrémité supérieure de la poche où est réalisé ledit serrage.

Tel qu'illustré sur les figures 1 à 3, le collier de serrage 27 est agencé à l'intérieur de l'enceinte. Celui-ci est disposé sous le plateau 7 notamment dans l'intervalle laissé entre l'extrémité supérieure 23 du tube 13 et le plafond 19 de l'enceinte 11, tel qu'illustré en figure 2, voire entre le plafond 19 et la plaque intermédiaire 24, tel qu'illustré en figure 3. Ce collier de serrage 27 est disposé au niveau de l'orifice 9. Le collier de serrage 27 présente de préférence une forme circulaire et est disposé coaxialement à l'orifice 9 et au tube 13. Cette forme circulaire, ou quasi circulaire, est obtenue grâce à la flexibilité du collier 27. En position repos, c'est-à-dire lorsque le levier de commande 25 n'est pas actionné, le collier 27 présente un diamètre initial qui est supérieur à celui de l'orifice 9 afin de permettre le positionnement des tiges de fleurs convenablement dans le tube 13. Le collier 27 est ensuite apte à être serré progressivement et concentriquement par rapport à son diamètre initial, en actionnant le levier 25, jusqu'à atteindre un diamètre adapté à celui formé par les tiges du bouquet de fleurs disposées dans la poche à l'intérieur de l'enceinte 11, c'est-à-dire dans le tube 13.

Le dispositif mécanique est agencé dans l'enceinte entre le levier de commande 25 et le collier de serrage 27. La manipulation du levier de commande 25 permet d'actionner ledit dispositif mécanique. Ce dispositif mécanique est agencé dans un plan parallèle au plan formé par le plateau supérieur 7, c'est-à-dire qu'il est positionné horizontalement dans l'enceinte 11 de la valise 1. La manipulation du levier 25 permet d'actionner le dispositif mécanique pour le déplacer dans ce plan parallèle au plateau 7 supérieur, ledit dispositif mécanique agissant sur le collier 27 pour le serrer progressivement et concentriquement, proportionnellement à la position du levier 25, de manière à arrêter le diamètre de serrage du collier 27 dans une positon adaptée au diamètre formé par les tiges du bouquet de fleurs.

Tel qu'illustré sur les figures 1 et 2, le collier de serrage 27 est constitué de deux lamelles flexibles 29,31 disposées en vis-à-vis, dans le même plan que le dispositif mécanique. Ces lamelles 29,31 sont courbées circulairement, grâce à leur flexibilité, pour coopérer et former un cercle permettant de serrer la poche. Ces deux lamelles 29,31 flexibles sont solidarisées avec le dispositif mécanique de sorte que l'actionnement dudit dispositif agit simultanément sur lesdites lamelles 29,31 pour serrer progressivement et concentriquement le cercle formé.

Selon une variante de conception illustrée en figure 3, le collier de serrage 27 est constitué par deux câbles ou tiges flexibles 29', 31' pouvant également être envisagés sur la machine illustrée en figures 1 et 2, voire sur tout autre variante de machine selon l'invention.

On pourra en outre concevoir le collier 27 de serrage au moyen d'une seule lamelle flexible courbée circulairement pour former un cercle, l'actionnement du dispositif étant, dans ce cas, apte à agir sur cette lamelle unique pour la serrer progressivement et concentriquement, de manière semblable au collier composé de deux lamelles tel que décrit selon ce mode préférentiel de conception. Il en est de même en remplaçant la lamelle flexible par un seul câble flexible ou une seule tige flexible.

Selon le mode de conception illustré aux figures 1 et 2, le dispositif mécanique est constitué de deux systèmes de transmission 33,35 à came. De même, le dispositif mécanique, selon la variante illustrée en figure 3, est constitué de deux systèmes de transmission 33', 35' à cames. En outre, le principe de fonctionnement de cette variante de machine reste strictement identique à celui décrit pour la machine illustrée aux figures 1 et 2, à la différence qu'elle utilise des câbles ou tiges flexibles pour la constitution des deux parties du collier flexible ; on peut toutefois envisager cette variante de machine illustrée en figure 3, avec un collier constitué de deux lamelles.

Tel que cela apparaît sur la figure 1, les systèmes de transmission 33,35 ou 33',35' à came sont disposés en vis-à-vis et inversés l'un par rapport à l'autre. En outre, ces systèmes de transmission sont disposés dans un plan horizontal et connectés entre eux par des moyens de transmission, ce qui permet de les actionner simultanément sous l'action du levier de commande 25, pour agir sur les deux parties du collier de serrage 27 constitués par les deux lamelles 29,31 ou les deux câbles ou tiges flexibles 39',31'.

Tel qu'illustré sur les figures 1 et 3, le premier système de transmission 33, 33' est agencé pour maintenir la première extrémité 37, 37' de la première lamelle 29 ou du premier câble 29', en la translatant dans une direction radiale par rapport au cercle, c'est-à-dire vers le centre du cercle dont le diamètre est variable. En outre, ce premier système de transmission 33, 33' permet également de coulisser la seconde portion 39, 39' de la seconde lamelle 31 ou du second câble 31' par rapport à la première extrémité 37, 37' de la première lamelle 29 ou du premier câble 29'. Le coulissement de cette seconde portion 39, 39' est réalisé, de préférence, dans une direction quasi tangentielle par rapport au cercle, au niveau de ladite première extrémité 37, 37' de la première lamelle 29 ou du premier câble 29'. Par ailleurs, la vitesse de coulissement de cette seconde portion 39, 39' est proportionnelle à la vitesse de translation de la première extrémité 37, 37'.

A l'inverse de ce premier système de transmission 33, 33', le second système de transmission 35, 35' est agencé pour maintenir la première extrémité 41, 41' de la seconde lamelle 31 ou du second câble 31' en la translatant radialement, c'est-à-dire vers le centre du cercle. La translation radiale de la première extrémité 41, 41' de la seconde lamelle 31 ou du second câble 31' est réalisée à vitesse égale à celle de la première extrémité 37, 37' de la première lamelle 29 ou du premier câble 29', suivant une direction opposée à celle-ci. En outre, le second système de transmission 35, 35' permet de coulisser de manière quasi tangentielle la seconde portion 43, 43' de la première lamelle 29 ou du premier câble 29' par rapport à la première extrémité 41, 41' de la seconde lamelle 31 ou du second câble 31'. La vitesse de coulissement de cette seconde portion 43, 43' de la première lamelle 29 ou du second câble 29', entraînée par le second système de transmission 35, 35', est de préférence égale et directement opposée à la vitesse de coulissement de la seconde portion 39, 39' de la seconde lamelle 31 ou du second câble 31', entraînée par le premier système de transmission 33.

Les deux systèmes de transmission 33,35 ou 33',35' sont de conception similaire et sont inversés. On ne décrira ensuite que le mode de conception du premier système de transmission 33 illustré en figure 1 et 2, celui du second système de transmission 35 étant similaire et inversé par rapport au premier, tel que cela apparaît aisément sur la figure 1. Cette description du premier système de transmission 33 est également valable pour la conception des systèmes de transmission 33', 35' illustrés en figure 3, en se rattachant aux références correspondantes sur cette figure 3.

Tel qu'illustré sur les figures 1 et 3, le système de transmission 33,33' est constitué d'une barre longitudinale 45,45' munie de glissières 47,47'. Cette barre longitudinale 45,45' reçoit une came 49,49'. Cette came 49,49' est éventuellement solidaire du levier de commande 25, selon son positionnement à gauche ou à droite sur la machine, la translation dudit levier 25 suivant la longueur de la barre longitudinale 45,45' permettant la translation de la came 49,49' montée en glissière sur ladite barre 45,45'. En outre, le système de translation 33,33' comprend également une barre transversale 51,51' à glissière 53,53'. Cette barre transversale 51,51' est montée perpendiculairement par rapport à la barre longitudinale 45,45'. Cette barre transversale 51,51' dispose d'une glissière 53,53' sur laquelle est monté en glissière un coulisseau 55,55', ledit coulisseau 55,55' étant monté simultanément coulissant par rapport à la came 49,49'. La translation de la came 49,49' suivant la barre longitudinale 45,45' est apte à entraîner la translation du coulisseau 55,55' sur la barre transversale 51,51', la vitesse de translation du coulisseau 55,55' étant proportionnelle à la vitesse de translation de la came 49,49'. Par ailleurs, la translation du levier de commande 25 permet simultanément la translation de la came du second système de transmission 35,35' disposé en vis-à-vis, grâce aux moyens de transmission, tel que cela sera décrit plus en détail ci-après.

L'extrémité 57,57' du coulisseau 55,55' est agencée pour maintenir fixe la première extrémité 37,37' de la première lamelle 29 ou du premier câble 29'. L'extrémité 57,57' du coulisseau 55,55' est également agencée pour recevoir de manière coulissante, la seconde portion 39,39' de la seconde lamelle 31 ou du second câble 31', le montage coulissant de ladite seconde portion 39,39' étant de préférence agencé à proximité de ladite première extrémité 37,37' fixe sur le coulisseau 55,55'. En outre, l'extrémité 59,59' de la seconde portion 39,39', illustrées en figures 1 et 3, est solidaire vis-à-vis de la came 49,49'. Ainsi lorsque la came 49,49' translate le long de la barre longitudinale 55,55', l'extrémité 59,59' de la seconde portion 39,39' se déplace avec celle-ci, ce qui entraîne le coulissement de ladite seconde portion 39,39' à l'intérieur du coulisseau 55,55'. Pour cela, le coulisseau 55,55' est muni d'un orifice 61,61' permettant le passage de la lamelle 31 ou du câble 31', tel qu'illustré sur les figures 1 et 3. Cet assemblage est identique sur la came opposée 63,63', tel que cela apparaît sur les figures 1 et 3.

Ainsi, les extrémités 59,59' des secondes portions 39,43 ou 39',43' de la première 29 et de la seconde 31 lamelles ou du premier 29' et du second 31' câble sont entraînées en translation par les cames 49,63 ou 49',63' des deux systèmes de transmission 33,35 ou 33',35', ce qui entraîne le coulissement desdites secondes portions 39,43 ou 39',43' au travers des coulisseaux 55,65 ou 55',65' qui, simultanément, se rapprochent vers le centre du cercle. Cela permet à la fois le rapprochement des premières extrémités 37,41 ou 37',41' des lamelles 29,31 ou des câbles 29',31' et des parties des secondes portions 39,43 ou 39',43' disposées dans les orifices 61,67 ou 61',67' sur les coulisseaux 55,65 ou 55',65' constituant des points de tangence avec lesdites premières extrémités. On conserve ainsi une courbe circulaire entre les lamelles ou les câbles formant un cercle. Il convient pour cela de déplacer les coulisseaux 55,65 ou 55',65' proportionnellement à la vitesse de déplacement des cames 49,63 ou 49',63' pour maintenir une forme circulaire entre les lamelles 29,31 ou les câbles 29',31'.

Pour cela, selon le mode de réalisation de la machine illustrée sur la figure 1, les cames 49,63 comprennent chacune une pièce 69a, 69b montée en glissière par rapport à la barre longitudinale 45,71. Cette pièce 69a, 69b présente de préférence une forme triangulaire, notamment un triangle rectangle qui présente un coté adjacent 73, lequel est monté en glissière sur la barre longitudinale 45, et un coté hypoténuse 75 vis-à-vis duquel est monté coulissant le coulisseau 55. En outre, l'extrémité 59 de la seconde portion 39 de la seconde lamelle 31 est fixée vis-à-vis de l'extrémité angulaire 77 formée entre le côté adjacent 73 et le côté hypoténuse 75 de la pièce 69a, 69b, et en particulier vis-à-vis d'une pièce rapportée 79 sur cette extrémité angulaire 77. Cette pièce rapportée 79 présente une longueur agencée pour permettre la fixation de l'extrémité 59 de la seconde portion 39 à une distance proche de celle de l'orifice 61 sur le coulisseau 55, lorsqu'il est défini dans sa position initiale, ce qui permet lors de la translation de la seconde portion 39 de maintenir celle-ci quasiment tangentiellement au niveau de son point de tangence avec la première extrémité 37 de la première lamelle 29. Il en est de même pour l'autre lamelle 29 sur l'autre pièce 69b.

Telle qu'illustrée sur la figure 1, l'extrémité opposée 81 du coulisseau 55, monté coulissant sur la came 49, comprend une face inclinée d'un angle complémentaire à l'angle formé sur ladite came 49 entre le côté adjacent 73 et le côté hypoténuse 75, de manière à ce que la somme des deux angles soit égale à 90 degrés. En outre, ledit angle formé entre le coté adjacent 73 et le coté hypoténuse 75 sur la came 49 est de préférence de l'ordre de 72 degrés, ce qui permet la translation des coulisseaux 55,65 proportionnellement à la translation des cames 49,63 en maintenant une courbe circulaire entre les lamelles 29,31 formant un cercle.

Selon la variante de réalisation de la machine illustrée en figure 3, les différences essentielles concernent la mise en oeuvre du montage coulissant entre la came 49',63' et le coulisseau 55',65'. En effet, la came 49',63' est constituée d'une fine plaque 69' sur laquelle est fixée l'extrémité 59' de la seconde portion 39',43' de la lamelle 29',31'. Cette plaque 69' est munie d'une lumière 75a longitudinale inclinée. Cette lumière 75a reçoit une tête de guidage 75b, notamment un galet, agencée à l'extrémité opposée 81' du coulisseau 55'. On réalise ainsi un montage coulissant entre la came 49',63' et le coulisseau 55',65'. De manière préférentielle, l'angle α formé entre la lumière 75a et le côté arrière 73' de la plaque 69', illustré en figure 3, est de 72 degrés.

Selon le mode de réalisation de la machine illustrée sur les figures 1 et 2, le levier de commande 25 est solidaire de la came 49 du premier système de transmission 33. En outre, le dispositif comprend une barre de transmission 83 agencée entre les deux systèmes de transmission 33,35, laquelle permet la translation du second système de transmission 35 dans le sens opposé au premier système 33. Ainsi, la translation du levier de commande 25 entraîne la came 49 du premier système 33 de transmission dans le même sens de translation. Celle-ci 49 actionne alors la barre de transmission 83 qui entraîne la translation dans le sens opposé de la came 63 du second système de transmission 35. Pour cela, la barre de transmission 83 a ses extrémités 85 connectées aux deux cames 49,63, ladite barre 83 étant de plus articulée à l'intérieur de l'enceinte 11 de manière à transmettre un mouvement opposé à la seconde came 63.

Selon la variante de réalisation de la machine, illustrée en figure 3, le levier de commande 25 est solidaire de la came 63' permettant notamment une utilisation avec la main droite. On peut toutefois prévoir son agencement sur l'autre came 49'. En outre, la machine 1 présente une variante de conception des moyens de transmission agencé entre les deux cames 49',63', lesquels peuvent également être envisagés sur la machine illustré en figures 1 et 2 en remplacement de la barre de transmission 83, voire sur tout autre variante. Tel qu'illustré en figure 3, ces moyens de transmission sont constitués d'un câble de transmission 83a monté sur des poulies 83b (ou galets) agencées aux quatre coins à l'intérieur de l'enceinte 11, dans le plan du dispositif mécanique. Ce câble de transmission 83a est disposé à la périphérie et il est solidaire de la plaques 67' sur les deux cames 49',63'. L'action du levier de commande 25 entraîne dans le même sens la came 63', ce qui entraîne le câble de transmission 83a et par conséquent la seconde came 49' qui se déplace en sens inverse par rapport à la première came 63' du fait de leur positionnement en vis-à-vis, le déplacement se faisant avec une vitesse identique.

Selon la machine 1 illustrée en figures 1 et 2, le levier de commande 25 est articulé par rapport à la came 49 du premier système de transmission 33, au moyen d'une liaison pivot 87 ou rotule illustrée en figures 1 et 2. Cette articulation 87 est agencée pour permettre l'escamotage du levier de commande 25 de manière à le rabattre et le disposer à l'intérieur de l'enceinte 11, par exemple le long de la barre longitudinale 45, ce qui permet de le ranger complètement à l'intérieur de l'enceinte 11 de la valise 1 et facilite donc le transport de celle-ci.

De manière préférentielle, le levier de commande 25 peut être inversé et positionné sur le coté opposé du caisson et solidarisé à la came du système de transmission opposé. Cette conception est notamment envisagée pour les utilisateurs gauchers. Selon cette conception, les moyens de transmission 83, 83a, 83b entraînent donc en translation, dans le sens opposé, la came du premier système de transmission.

Selon un autre mode de réalisation, tel qu'illustré sur la figure 3, on peut prévoir que le levier soit amovible et puisse être adapté indifféremment, et de manière réversible, sur la première came pour une utilisation à droite, ou sur la seconde came pour une utilisation à gauche. Pour cela, le levier 25, constitué notamment d'une poignée, sera dévissable.

On peut également prévoir une machine selon l'invention équipée de deux leviers de commande, l'un solidaire de la première came 49,49', et l'autre de la seconde came 63,63'. Une telle conception présente notamment pour avantage de démultiplier les efforts. Dans ce cas, l'utilisateur positionne tout d'abord son emballage, forme la poche, puis place les fleurs dans ladite poche en mettant en forme le bouquet et ensuite il actionne les deux leviers, de préférence dans un sens inversé l'un par rapport à l'autre, correspondant au sens inversé de translation des deux cames 49,63 ou 49',63'.

Tel qu'illustré sur les figures 1 à 3, le caisson se présente sous la forme d'une valise munie d'une face supérieure 7, d'une face inférieure 17, d'une face avant 5 qui présente une poignée de manipulation 3 voire deux poignées 3a, 3b, de deux côtés latéraux 89,91 et d'une face arrière 93. Les cotés latéraux 89,91 et la face arrière 93 sont de préférence munis de parois articulées 95, 97, 99 aptes à être pivotées, tel qu'illustré sur les figures 1 et 2, afin de permettre l'accès à l'intérieur de la valise 1 dans l'enceinte 11, notamment au tube 13 conique ou cylindrique, et éventuellement pour les opérations de maintenance sur les systèmes de transmission 33,35 et sur le collier 27.

On pourra également envisager un plateau supérieur 7 amovible pour faciliter ses opérations de maintenance ; pour cela, le plateau 7 est de préférence vissé au niveau de quatre patte de fixation 100 illustrées en figure 3.

Dans le cas de la machine illustrée sur la figure 3, avec les poignées 3a, 3b disposées sur les côtés, il est également prévu une ouverture de la face avant 5.

En outre, ces parois articulées 95, 97, 99 ont également pour avantage de permettre le rangement d'accessoires, tels que des rubans 101, pour la réalisation des liens de serrage de la poche serrée sur les tiges du bouquet de fleurs. En outre, le levier de commande 25 est agencé sur le contour du caisson, notamment au niveau d'au moins un des cotés latéraux 89,91 présentant une paroi articulée 95,97, ce qui facilite l'escamotage du levier 25 pour le ranger à l'intérieur de l'enceinte 11.

Par ailleurs, la machine comprend de préférence des moyens de maintien en position du levier de commande. Ces moyens de maintien sont agencés pour maintenir le levier 25 dans sa position d'arrêt, correspondant à la position de serrage de l'extrémité supérieure de la poche, et ainsi éviter son déplacement durant la mise en place du lien, ce qui permet de conserver la poche serrée autour des tiges du bouquet de fleurs et de garder les mains libres. Ces moyens de maintien sont par exemple constitués d'une barre crantée ou d'une rampe dans laquelle le levier peut être engagé et maintenu en position. En outre, on pourra prévoir de tels moyens de maintien sur les deux cotés de la machine, lorsque le levier est, ou alors est susceptible d'être positionné sur le second coté, solidaire de la seconde came.

En mode d'utilisation normal, selon le mode illustré en figures 1 et 2, la face arrière 93 de la valise 1 est disposée en vis-à-vis de l'utilisateur, la face avant 5 munie de la poignée 3 étant par conséquent disposée sur l'arrière par rapport à l'utilisateur telle qu'illustrée en figure 2, ledit utilisateur pouvant ainsi accéder à l'enceinte 11 par la face arrière 93 en faisant pivoter la paroi articulée 99. Au contraire, selon le mode illustré en figure 3, la face avant 5 munie de poignées 3a, 3b peut être disposée en vis-à-vis de l'utilisateur, lorsque celle-ci dispose d'une face articulée similaire à la face arrière 93.

De manière préférentielle et non limitative, tel qu'illustré sur les figures 1 à 3, le fond 15 mobil est constitué par une plaque de support 105 amovible disposée à l'horizontal et montée coulissant par rapport à deux rampes 107,109 à glissière 111,113 permettant de modifier la hauteur de positionnement de ladite plaque 105 par exemple suivant quatre paliers, sur laquelle repose l'extrémité inférieure 115 du tube 13 conique ou cylindrique. Pour cela, la hauteur du tube 13 est dimensionnée afin de permettre le changement de position de la plaque de support 105, tout en conservant un intervalle suffisant entre le plafond 19 de l'enceinte 11 et l'extrémité supérieure 23 du tube 13, ledit intervalle étant prévu pour le positionnement des deux lamelles flexibles 29,31 ou câble 29',31' et la translation des coulisseaux 55,65 ou 55',65' sur les deux systèmes de transmission 33,35 ou 33',35'.

En outre, la paroi articulée 99 devra disposer d'un angle d'ouverture suffisant pour permettre le retrait de la plaque amovible 105 hors des glissières 111,113 et donc hors de l'enceinte 11, et modifier sa hauteur de positionnement.

De manière préférentielle et non limitative, les rouleaux de ruban 101 sont agencés sur la face interne 117 de la paroi articulée 97 sur le coté latéral 91, les rubans 101 sont directement extrait de l'enceinte 11, ce qui les rend immédiatement et facilement accessibles. Sur cette face interne 117, sera de préférence également agencé un coupe ruban 119, illustré sur les figures 1 et 2.

Les parois de la valise 1 seront notamment réalisées en bois, en métal ou encore en matériau composite.

D'autres caractéristiques peuvent être envisagées sans sortir du cadre de la présente invention. On peut notamment concevoir une machine combinant des caractéristiques des deux machines illustrées aux figures 1 et 2 et en figure 3.

## Revendications

1. Machine (1) pour la préparation d'un bouquet de fleurs au moyen d'une feuille d'emballage apte à former une poche de réception des tiges de fleurs, la machine (1) comprenant une enceinte (11) et un plateau supérieur (7) muni d'un orifice (9) communiquant avec l'enceinte (11), ledit plateau (7) permettant le positionnement de la feuille d'emballage puis l'introduction d'une portion de ladite feuille au travers de l'orifice (9) pour la formation de ladite poche dans l'enceinte (11), et des moyens de serrage (25,33,35,33',35',27) de la poche sur les tiges de fleurs positionnées à l'intérieur de ladite poche, les moyens de serrage comprenant au moins un levier de commande (25) manuel assujettit à un dispositif mécanique, **caractérisée en ce que** le dispositif mécanique est agencé dans l'enceinte (11) et un collier de serrage (27) est agencé dans l'enceinte (11), sous le plateau (7), au niveau de l'orifice (9), ledit collier (27) étant constitué d'au moins une partie flexible munie de deux extrémités assujetties au dispositif mécanique (33,35) et disposé circulairement pour former un cercle présentant un diamètre initial supérieur ou égal à la dimension de l'orifice (9), le dispositif mécanique (33,35) étant agencé pour se déplacer dans un plan parallèle au plateau supérieur (7) et pour déplacer simultanément les extrémités de la partie flexible (39, 41, 39', 41') du collier (27) en serrant progressivement et concentriquement ledit collier (27), proportionnellement à la position dudit levier de commande (25).

2. Machine (1) selon la revendication 1, **caractérisée en ce que** le collier (27) est constitué de deux parties flexibles, notamment deux lamelles flexibles (29,31) ou deux câbles flexibles (29',31'), disposées en vis-à-vis et circulairement pour former un cercle, le dispositif mécanique (33,35) étant agencé pour agir simultanément sur les extrémités (37, 37', 41, 41') des deux parties flexibles en serrant progressivement et concentriquement le collier (27).

3. Machine (1) selon la revendication 2, **caractérisée en ce que** le dispositif mécanique est constitué de deux systèmes de transmission (33,35, 33',35') à came (49,63) disposés en vis-à-vis et inversés, des moyens de transmission permettant d'actionner simultanément lesdits systèmes de transmission (33,35) au moyen du levier de commande (25), ledit système de transmission étant agencés pour agir sur les deux parties flexibles (29,31, 29',31') en serrant progressivement et concentriquement le collier (27).

4. Machine (1) selon la revendication 3, **caractérisée en ce que** le premier système de transmission (33,33') est agencé pour, d'une part, maintenir la première extrémité (37,37') de la première partie flexible (29,29') en la translatant radialement par rapport au cercle et, d'autre part, faire coulisser quasi tangentiellement la seconde portion (39,39') de la seconde partie flexible (31,31') par rapport à ladite première extrémité (37,37') de la première partie flexible (29,29'), la vitesse de coulissement de la seconde portion (39,39') de la seconde partie flexible (31,31') étant proportionnelle à la vitesse de translation de la première extrémité (37,37') de la première partie flexible (29,29'), et inversement, le deuxième système (35,35') de transmission est agencé pour, d'une part, maintenir la première extrémité (41,41') de la seconde partie flexible (31,31') en la translatant radialement à vitesse égale et opposée à la première extrémité (37,37') de la première partie flexible (29,29') et, d'autre part, coulisser quasiment tangentiellement la seconde portion (43,43') de la première partie flexible (29,29') par rapport à ladite première extrémité (41,41') de la seconde partie flexible (31,31'), la vitesse de coulissement de la seconde portion (43,43') de la première partie flexible (29,29') étant égale et opposée à la vitesse de coulissement de la seconde portion (39,39') de la seconde partie flexible (31,31').

5. Machine (1) selon la revendication 4, **caractérisée en ce que** chaque système de translation (33,35, 33',35') est constitué d'une barre longitudinale (45,71,45') à glissière (47,47'), d'une came (49,63, 49',63') montée en glissière sur la barre longitudinale (45,71,45'), d'une barre transversale (51,51') à glissière (53) montée perpendiculairement par rapport à la barre longitudinale (45,71,45'), d'un coulisseau (55,65,55',65') monté simultanément en glissière sur la barre transversale (51,51') et coulissant par rapport à la came (49,63,49',63'), la liaison entre la came et le coulisseau étant agencée pour que la translation de la came sur la barre longitudinale entraîne la translation à vitesse proportionnelle du coulisseau sur la barre transversale, ledit coulisseau étant agencé pour maintenir fixe la première extrémité (37,41,37',41') de l'une des parties flexibles (29,31,29',31') et pour recevoir de manière coulissant, à proximité de ladite première extrémité, la seconde portion (39,43,39',43') de l'autre des parties flexibles (29,31,29',31'), l'extrémité (59,59') de ladite seconde portion étant solidaire de la came et apte à se déplacer avec celle-ci pour permettre le coulissement de ladite seconde portion à l'intérieur du coulisseau.

6. Machine (1) selon la revendication 5, **caractérisée en ce que** la came (49,63) comprend une pièce (69a,69b), notamment de la forme d'un triangle rectangle disposé dans un plan parallèle au plateau supérieur (7), sur laquelle est montée coulissant le coulisseau (55,65) suivant le côté hypoténuse (75) du triangle, la pièce (69a,69b) étant montée en glissière sur la barre longitudinale (45,71) suivant le côté adjacent (73), l'extrémité (59) de la seconde portion (39,43) de la partie flexible (29,31) étant maintenue fixe vis-à-vis de l'extrémité angulaire (77) formée entre le côté adjacent (73) et le côté hypoténuse (75) de la pièce (69a,69b).

7. Machine (1) selon la revendication 6, **caractérisé en ce que** l'angle formé entre le côté adjacent (73) et le côté hypoténuse (75) est de l'ordre de 72 degrés.

8. Machine (1) selon la revendication 5, **caractérisé en ce que** la came (49',63') comprend une plaque (69') montée en glissière sur la barre longitudinale (45') et munie d'une lumière (75a) longitudinale inclinée, cette lumière recevant une tête de guidage (75b) agencée sur le coulisseau (55',65'), l'extrémité (59') de la seconde portion (39',43') de la partie flexible (29',31') étant maintenue fixe vis-à-vis de cette plaque (69').

9. Machine (1) selon la revendication 8, **caractérisé en ce que** la lumière (75a) est inclinée d'un angle α de l'ordre de 72 degrés par rapport au côté arrière (73') de la plaque (69').

10. Machine (1) selon l'une des revendications 1 à 9, **caractérisée en ce qu'**elle consiste en un caisson portatif (1), notamment de la forme d'une valise, constituant ladite enceinte (11), la face supérieure du caisson constituant ledit plateau (7) et présentant l'orifice (9).

11. Machine (1) selon la revendication 10, **caractérisée en ce que** le levier de commande (25) est agencé sur le contour du caisson, ledit levier (25) étant escamotable.

12. Machine (1) selon la revendication 11, **caractérisée en ce que** le levier de commande (25) est articulé par rapport à la came (49, 63, 49', 63') d'un des systèmes de transmission (33, 35, 33', 35') pour permettre son escamotage.

13. Machine (1) selon la revendication 11, **caractérisée en ce que** le levier de commande (25) est réversible pour une utilisation soit de la main gauche soit de la main droite.

14. Machine (1) selon l'une des revendications 11 à 13, **caractérisée en ce que** la face avant (5) du caisson présente au moins une poignée de manipulation (3, 3a, 3b), les côtés latéraux (89,91) et la face arrière (93) de la valise étant munis d'une paroi (95, 97, 99) articulée apte à permettre l'accès à intérieur de la valise.

15. Machine (1) selon l'une des revendications 10 à 14, **caractérisée en ce que** le caisson dispose d'un tube (13), notamment cylindrique ou conique, s'étendant verticalement dans l'enceinte (11) en dessous de l'orifice (9), ledit tube (13) constituant une chambre de réception de la feuille pour la mise en forme de la poche.

16. Machine (1) selon la revendication 15, **caractérisée en ce qu'**elle comprend une plaque amovible (105) et au moins une rampe (107,109) à glissière (111,113) permettant la réception de ladite plaque (105) suivant plusieurs hauteurs de positionnement, ladite plaque (105) supportant le tube (13) pour modifier sa position et la profondeur de la poche.

17. Machine (1) selon l'une des revendications 10 à 16, **caractérisée en ce que** le caisson comprend des moyens de maintien en position du levier (25) agencé pour éviter son déplacement durant la mise en place d'un lien et pour conserver la poche serrée autour des tiges du bouquet de fleurs.

## Claims

1. A machine (1) for preparing a bouquet of flowers using a wrapping sheet able to form a pouch for receiving flower stems, the machine (1) comprising an enclosure (11) and an upper plate (7) provided with an orifice (9) communicating with the enclosure (11), said plate (7) making it possible to position the wrapping sheet, then to introduce a portion of said sheet through the orifice (9) to form said pouch in the enclosure (11), and tightening means (25, 33, 35, 33', 35', 27) for tightening the pouch on the flower stems positioned inside said pouch, the tightening means comprising at least one manual control lever (25) subject to a mechanism device, **characterized in that** the mechanical device is arranged in the enclosure (11) and a tightening collar (27) is arranged in the enclosure (11), under the plate (7), at the orifice (9), said collar (27) being made up of at least one flexible part provided with two ends subject to the mechanical device (33, 35) and arranged circularly to form a circle having an initial diameter larger than or equal to the size of the orifice (9), the mechanical device (33, 35) being arranged to move in a plane parallel to the upper plate (7) and to move the ends of the flexible part (39, 41, 39', 41') of the collar (27) simultaneously by gradually and concentrically tightening said collar (27), in proportion to the position of said control lever (25).

2. The machine (1) according to claim 1, **characterized in that** the collar (27) is made up of two flexible parts, in particular two flexible blades (29, 31) or two flexible cables (29', 31'), arranged opposite one another and circularly to form a circle, the mechanical device (33, 35) being arranged to act on the ends (37, 37', 41, 41') of the two flexible parts simultaneously by gradually and concentrically tightening the collar (27).

3. The machine (1) according to claim 2, **characterized in that** the mechanical device is made up of two cam (49, 63) transmission systems (33, 35, 33', 35') across from one another and inverted, transmission means making it possible to actuate said transmission systems (33, 35) simultaneously using the control lever (25), said transmission system being arranged to act on the two flexible parts (29, 31, 29', 31') by gradually and concentrically tightening the collar (27).

4. The machine (1) according to claim 3, **characterized in that** the first transmission system (33, 33') is arranged so as, on the one hand, to maintain the first end (37, 37') of the first flexible part (29, 29') by translating it radially in relation to the circle and, on the other hand, to cause the second portion (39, 39') of the second flexible part (31, 31') to slide quasi-tangentially in relation to said first end (37, 37') of the first flexible part (29, 29'), the sliding speed of the second portion (39, 39') of the second flexible part (31, 31') being proportional to the translation speed of the first end (37, 37') of the first flexible part (29, 29'), and conversely, the second transmission system (35, 35') is arranged so as, on the one hand, to maintain the first end (41, 41') of the second flexible part (31, 31') by translating it radially at equal speed and opposite the first end (37, 37') of the first flexible part (29, 29') and, on the other hand, to slide the second portion (43, 43') of the first flexible part (29, 29') practically tangentially in relation to said first end (41, 41') of the second flexible part (31, 31'), the sliding speed of the second portion (43, 43') of the first flexible part (29, 29') being equal to and opposite the sliding speed of the second portion (39, 39') of the second flexible part (31, 31').

5. The machine (1) according to claim 4, **characterized in that** each translation system (33, 35, 33', 35') is made up of a longitudinal guide (47, 47') strip (45, 71, 45'), a cam (49, 63, 49', 63') slidingly mounted on the longitudinal strip (45, 71, 45'), a transverse guide (53) strip (51, 51') mounted perpendicular in relation to the longitudinal strip (45, 71, 45'), a slider (55, 65, 55', 65') mounted simultaneously in the guide on the transverse strip (51, 51') and sliding relative to the cam (49, 63, 49', 63'), the connection between the cam and the slide being arranged so that the translation of the cam on the longitudinal strip drives the translation at a proportional speed of the slide on the transverse strip, said slide being arranged to keep the first end (37, 41, 37', 41') of one of the flexible parts (29, 31, 29', 31') stationary and to slidingly receive, near said first end, the second portion (39, 43, 39', 43') of the other of the flexible parts (29, 31, 29', 31'), the end (59, 59') of said second portion being secured to the cam and able to move therewith to allow said second portion to slide inside the slider.

6. The machine (1) according to claim 5, **characterized in that** the cam (49, 63) comprises a piece (69a, 69b), in particular in the form of a right-angled triangle, arranged in a plane parallel to the upper plate (7), on which the slider (55, 65) is slidingly mounted along the hypotenuse side (75) of the triangle, the piece (69a, 69b) being mounted in the guide on the longitudinal strip (45, 71) along the adjacent side (73), the end (59) of the second portion (39, 43) of the flexible part (29, 31) being kept stationary relative to the angular element (77) formed between the adjacent side (73) and the hypotenuse side (75) of the piece (69a, 69b).

7. The machine (1) according to claim 6, **characterized in that** the angle formed between the adjacent side (73) and the hypotenuse side (75) is in the vicinity of 72 degrees.

8. The machine (1) according to claim 5, **characterized in that** the cam (49', 63') comprises a plate (69') mounted in the guide on the longitudinal strip (45') and provided with an inclined longitudinal lumen (75a), said lumen receiving a guide head (75b) arranged on the slider (55', 65'), the end (59') of the second portion (39', 43') of the flexible part (29', 31') being kept stationary relative to said plate (69').

9. The machine (1) according to claim 8, **characterized in that** the lumen (75a) is inclined by an angle a of approximately 72 degrees relative to the rear side (73') of the plate (69').

10. The machine (1) according to one of claims 1 to 9, **characterized in that** it consists of a portable box (1), in particular in the form of a suitcase, making up said enclosure (11), the upper surface of the box making up said plate (7) and having the orifice (9).

11. The machine (1) according to claim 10, **characterized in that** the control lever (25) is arranged on the contour of the box, said lever (25) being retractable.

12. The machine (1) according to claim 11, **characterized in that** the control lever (25) is hinged relative to the cam (49, 63, 49', 63') of one of the transmission systems (33, 35, 33', 35') to allow the retraction thereof.

13. the machine (1) according to claim 11, **characterized in that** the control lever (25) is reversible for use by either the left hand or the right hand.

14. The machine (1) according to one of claims 11 to 13, **characterized in that** the front surface (5) of the box has at least one handle (3, 3a, 3b), the lateral sides (89, 91) and the rear surface (93) of the suitcase being provided with a hinged wall (95, 97, 99) able to allow access to the inside of the suitcase.

15. The machine (1) according to one of claims 10 to 14, **characterized in that** the box has a tube (13), in particular cylindrical or conical, extending vertically in the enclosure (11) below the orifice (9), said tube (13) making up a chamber for receiving the sheet for shaping the pouch.

16. The machine according to claim 15, **characterized in that** it comprises a removable plate (105) and at least one ramp (107, 109) with a guide (111, 113) making it possible to receive said plate (105) according to several positioning heights, said plate (105) supporting the tube (13) to modify its position and the depth of the pouch.

17. The machine (1) according to one of claims 10 to 16, **characterized in that** the box comprises means for keeping the lever (25) in position arranged to prevent it from moving during the placement of a connector and to keep the pouch tightened around the stems of the bouquet of flowers.

## Patentansprüche

1. Maschine (1) für die Herstellung eines Blumenstraußes mittels einer Verpackungsfolie, die geeignet ist, eine Tasche zur Aufnahme der Blumenstengel zu bilden, wobei die Maschine (1) einen Raum (11) und eine obere Platte (7), welche mit einer mit dem Raum (11) in Verbindung stehenden Öffnung (9) versehen ist, wobei die Platte (7) das Positionieren der Verpackungsfolie, dann das Einführen eines Abschnitts der Folie durch die Öffnung (9) hindurch für das Ausbilden der Tasche in dem Raum (11) ermöglicht, sowie Mittel zum Festklemmen (25, 33, 35, 33', 35', 27) der Tasche an den innerhalb der Tasche positionierten Blumenstengeln umfaßt, wobei die Klemmittel wenigstens einen manuellen Bedienungshebel (25) umfassen, der gut an einer mechanischen Vorrichtung befestigt ist, **dadurch gekennzeichnet, daß** die mechanische Vorrichtung in dem Raum (11) angeordnet ist und ein Klemmring (27) in dem Raum (11) unter der Platte (7) im Bereich der Öffnung (9) angeordnet ist, wobei der Ring (27) aus wenigstens einem flexiblen Teil, das mit zwei an der mechanischen Vorrichtung (33, 35) gut befestigten Enden versehen ist, besteht und kreisförmig angeordnet ist, um einen Kreis mit einem Ausgangsdurchmesser größer als die oder gleich der Abmessung der Öffnung (9) zu bilden, wobei die mechanische Vorrichtung (33, 35) eingerichtet ist, um sich in einer zu der oberen Platte (7) parallelen Ebene zu bewegen und um die Enden des flexiblen Teils (39, 41, 39', 41') des Rings (27) durch schrittweises und konzentrisches Festziehen des Rings (27) proportional zur Position des Bedienungshebels (25) gleichzeitig zu bewegen.

2. Maschine (1) nach Anspruch 1, **dadurch gekennzeichnet, daß** der Ring (27) aus zwei flexiblen Teilen, insbesondere zwei flexiblen Lamellen (29, 31) oder zwei flexiblen Seilen (29', 31') besteht, die einander gegenüberliegend und kreisförmig angeordnet sind, um einen Kreis zu bilden, wobei die mechanische Vorrichtung (33, 35) eingerichtet ist, um auf die Enden (37, 37', 41, 41') der beiden flexiblen Teile durch schrittweises und konzentrisches Festziehen des Rings (27) gleichzeitig zu wirken.

3. Maschine (1) nach Anspruch 2, **dadurch gekennzeichnet, daß** die mechanische Vorrichtung aus zwei Übertragungssystemen (33,35, 33',35') mit Nocken (49, 63) besteht, die gegenüberliegend und umgekehrt angeordnet sind, wobei Übertragungsmittel ermöglichen, die Übertragungssysteme (33, 35) mittels des Bedienungshebels (25) gleichzeitig zu betätigen, wobei das Übertragungssystem eingerichtet ist, um durch schrittweises und konzentrisches Festziehen des Rings (27) auf die beiden flexiblen Teile (29,31, 29',31') zur wirken.

4. Maschine (1) nach Anspruch 3, **dadurch gekennzeichnet, daß** das erste Übertragungssystem (33, 33') eingerichtet ist, um einerseits das erste Ende (37, 37') des ersten flexiblen Teils (29, 29') unter radialem Verschieben dessen gegenüber dem Kreis zu halten und um andererseits den zweiten Abschnitt (39, 39') des zweiten flexiblen Teils (31, 31') gegenüber dem ersten Ende (37, 37') des ersten flexiblen Teils (29, 29') quasi tangential gleiten zu lassen, wobei die Geschwindigkeit der Gleitbewegung des zweiten Abschnitts (39, 39') des zweiten flexiblen Teils (31, 31') proportional zur Verschiebegeschwindigkeit des ersten Endes (37, 37') des ersten flexiblen Teils (29, 29') ist, und umgekehrt, das zweite Übertragungssystem (35, 35') eingerichtet ist, um einerseits das erste Ende (41, 41') des zweiten flexiblen Teils (31, 31') unter radialem Verschieben dessen mit gleicher und zum ersten Ende (37, 37') des ersten flexiblen Teils (29, 29') entgegengesetzter Geschwindigkeit zu halten und um andererseits den zweiten Abschnitt (43, 43') des ersten flexiblen Teils (29, 29') gegenüber dem ersten Ende (41, 41') des zweiten flexiblen Teils (31, 31') quasi tangential gleiten zu lassen, wobei die Geschwindigkeit der Gleitbewegung des zweiten Abschnitts (43, 43') des ersten flexiblen Teils (29, 29') gleich der und entgegengesetzt zu der Geschwindigkeit der Gleitbewegung des zweiten Abschnitts (39, 39') des zweiten flexiblen Teils (31, 31') ist.

5. Maschine (1) nach Anspruch 4, **dadurch gekennzeichnet, daß** jedes Verschiebesystem (33,35, 33',35') aus einer Längsstange (45, 71, 45') mit Gleitführung (47, 47'), aus einem Nocken (49,63, 49',63'), der an der Längsstange (45, 71, 45') gleitend angebracht ist, aus einer Querstange (51, 51') mit Gleitführung (53), welche zu der Längsstange (45, 71, 45') senkrecht angebracht ist, aus einem Schieber (55, 65, 55', 65'), der gleichzeitig an der Querstange (51, 51') gleitend und gegenüber dem Nocken (49, 63, 49', 63') verschieblich angebracht ist, wobei die Verbindung zwischen dem Nocken und dem Schieber eingerichtet ist, damit die Verschiebung des Nockens auf der Längsstange zur Verschiebung des Schiebers auf der Querstange mit proportionaler Geschwindigkeit führt, wobei der Schieber eingerichtet ist, um das erste Ende (37, 41, 37', 41') von einem der flexiblen Teile (29, 31, 29', 31') fest zu halten und um in der Nähe des ersten Endes den zweiten Abschnitt (39, 43, 39', 43') des anderen der flexiblen Teile (29, 31, 29', 31') verschieblich aufzunehmen, wobei das Ende (59, 59') des zweiten Abschnitts mit dem Nocken fest verbunden und geeignet ist, sich mit diesem zu bewegen, um die Gleitbewegung des zweiten Abschnitts innerhalb des Schiebers zu ermöglichen.

6. Maschine (1) nach Anspruch 5, **dadurch gekennzeichnet, daß** der Nocken (49, 63) ein Teil (69a, 69b), insbesondere mit der Form eines rechtwinkligen Dreiecks, das in einer zu der oberen Platte (7) parallelen Ebene angeordnet ist, umfaßt, an dem der Schieber (55, 65) entlang der Hypotenusenseite (75) des Dreiecks verschieblich angebracht ist, wobei das Teil (69a, 69b) an der Längsstange (45, 71) entlang der benachbarten Seite (73) gleitend angebracht ist, wobei das Ende (59) des zweiten Abschnitts (39, 43) des flexiblen Teils (29, 31) gegenüber dem winkeligen Ende (77), das zwischen der benachbarten Seite (73) und der Hypotenusenseite (75) des Teils (69a, 69b) gebildet ist, fest gehalten ist.

7. Maschine (1) nach Anspruch 6, **dadurch gekennzeichnet, daß** der zwischen der benachbarten Seite (73) und der Hypotenusenseite (75) gebildete Winkel in der Größenordnung von 72 Grad liegt.

8. Maschine (1) nach Anspruch 5, **dadurch gekennzeichnet, daß** der Nocken (49', 63') eine Platte (69') umfaßt, die an der Längsstange (45') gleitend angebracht ist und mit einem geneigten Längsschlitzloch (75a) versehen ist, wobei dieses Schlitzloch einen an dem Schieber (55', 65') angeordneten Führungskopf (75b) aufnimmt, wobei das Ende (59') des zweiten Abschnitts (39', 43') des flexiblen Teils (29', 31') gegenüber dieser Platte (69') fest gehalten ist.

9. Maschine (1) nach Anspruch 8, **dadurch gekennzeichnet, daß** das Schlitzloch (75a) um einen Winkel α in der Größenordnung von 72 Grad gegenüber der Rückseite (73') der Platte (69') geneigt ist.

10. Maschine (1) nach einem der Ansprüche 1 bis 9, **dadurch gekennzeichnet, daß** sie aus einem tragbaren Kasten (1), insbesondere mit der Form eines Koffers besteht, der den Raum (11) bildet, wobei die Oberseite des Kastens die Platte (7) bildet und die Öffnung (9) aufweist.

11. Maschine (1) nach Anspruch 10, **dadurch gekennzeichnet, daß** der Bedienungshebel (25) am Umfang des Kastens angeordnet ist, wobei der Hebel (25) einklappbar ist.

12. Maschine (1) nach Anspruch 11, **dadurch gekennzeichnet, daß** der Bedienungshebel (25) gegenüber dem Nocken (49, 63, 49', 63') von einem der Übertragungssysteme (33, 35, 33', 35') angelenkt ist, um sein Einklappen zu ermöglichen.

13. Maschine (1) nach Anspruch 11, **dadurch gekennzeichnet, daß** der Bedienungshebel (25) für eine Benutzung entweder mit der linken Hand oder mit der rechten Hand umkehrbar ist.

14. Maschine (1) nach einem der Ansprüche 11 bis 13, **dadurch gekennzeichnet, daß** die Vorderseite (5) des Kastens wenigstens einen Griff zur Handhabung (3, 3a, 3b) aufweist, wobei die Seitenflächen (89, 91) und die Rückseite (93) des Koffers mit einer angelenkten Wand (95, 97, 99) versehen sind, die geeignet ist, den Zugang zum Innenraum des Koffers zu ermöglichen.

15. Maschine (1) nach einem der Ansprüche 10 bis 14, **dadurch gekennzeichnet, daß** der Kasten über ein insbesondere zylindrisches oder konisches Rohr (13) verfügt, das in dem Raum (11) vertikal unterhalb der Öffnung (9) verläuft, wobei das Rohr (13) eine Kammer zur Aufnahme der Folie für die Formung der Tasche bildet.

16. Maschine (1) nach Anspruch 15, **dadurch gekennzeichnet, daß** sie eine lösbare Platte (105) und wenigstens eine Schiene (107, 109) mit Gleitführung (111,113) umfaßt, welche die Aufnahme der Platte (105) in mehreren Positionierungshöhen ermöglicht, wobei die Platte (105) das Rohr (13) trägt, um dessen Position sowie die Tiefe der Tasche zu verändern.

17. Maschine (1) nach einem der Ansprüche 10 bis 16, **dadurch gekennzeichnet, daß** der Kasten Mittel zum Halten des Hebels (25) in Position umfaßt, die eingerichtet sind, um dessen Bewegung während des Anbringens eines Bandes zu verhindern und um die um die Stengel des Blumenstraußes festgezogene Tasche beizubehalten.
